(19) Europäisches Patentamt
European Patent Office
Office européen des brevets

(11) EP 0 586 135 B1

(12) EUROPEAN PATENT SPECIFICATION

(45) Date of publication and mention of the grant of the patent:
**15.10.1997 Bulletin 1997/42**

(51) Int Cl.[6]: **G02B 5/20**, G02B 1/04, G02B 5/22, C08K 5/09

(21) Application number: **93306485.9**

(22) Date of filing: **17.08.1993**

(54) **Optical filter**

Optischer Filter

Filtre optique

(84) Designated Contracting States:
**DE FR GB**

(30) Priority: **20.08.1992 JP 242585/92**

(43) Date of publication of application:
**09.03.1994 Bulletin 1994/10**

(73) Proprietor: **KUREHA KAGAKU KOGYO KABUSHIKI KAISHA**
**Chuo-ku Tokyo 103 (JP)**

(72) Inventors:
- **Sakagami, Teruo**
  **Iwaki-shi, Fukushima-ken (JP)**
- **Ogihara, Takeo**
  **Iwaki-shi, Fukushima-ken (JP)**
- **Fijii, Yasufumi**
  **Iwaki-shi, Fukushima-ken (JP)**
- **Katono, Hiroki**
  **Iwaki-shi, Fukushima-ken (JP)**

(74) Representative: **Woods, Geoffrey Corlett**
**J.A. KEMP & CO.**
**14 South Square**
**Gray's Inn**
**London WC1R 5LX (GB)**

(56) References cited:
**EP-A- 0 019 097** **GB-A- 1 201 066**
**US-A- 5 024 923**

- **DATABASE WPI Derwent Publications Ltd., London, GB; AN 86-116734 & JP-A-61 057 674 (FUJI PHOTO FILM KK.) 24 March 1986**
- **DATABASE WPI Derwent Publications Ltd., London, GB; AN 93-240125 & JP-A-5 163 408 (DAICEL CHEM IND LTD.) 29 June 1993**

Remarks:
The file contains technical information submitted after the application was filed and not included in this specification

EP 0 586 135 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

The present invention relates to an optical filter. More particularly, the present invention relates to an optical filter made of synthetic resins, which is capable of efficiently cutting-off light in the near infrared region and having light absorbing characteristics favourable for the adjustment of luminous efficiency.

Hitherto, optical filters made of a specific phosphate glass in which copper ions are incorporated have been used as photometric filters or luminous efficiency filters for cameras.

These optical filters made of glass, however, have many problems such as heavy weight, high susceptibility to devitrification over time due to high hygroscopicity, and difficulties in processing such as molding, cutting and polishing in the manufacture of the filters.

Optical filters made of synthetic resins have been proposed for solving the problem of a "heavy weight". US-A-4,152,332 proposes an infrared absorber composed of a metal complex of a bis-[cis-1,2-bis-(alkyl, hydrogen, aryl or heterocyclic)ethylene-1,2-dithiolate].

JP-A-61-134,702 proposes a near infrared absorbing filter having as its constitutional element an organic layer containing at least one compound of formula:

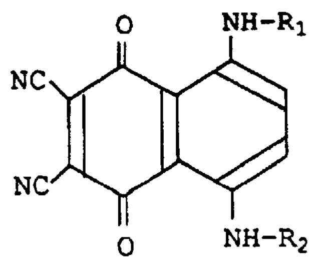

wherein $R_1$ is an aromatic group and $R_2$ is a hydrogen atom or an aromatic group.

JP-A-60-184,542 proposes a methacrylic resin composition for infrared filters comprising 100 parts by weight of a methacrylic resin and 1.2 to 4.0 parts by weight of Solvent Green 28, which is an anthraquinone dye.

JP-A-61-32,003 proposes an optical filter material containing at least one compound of formula:

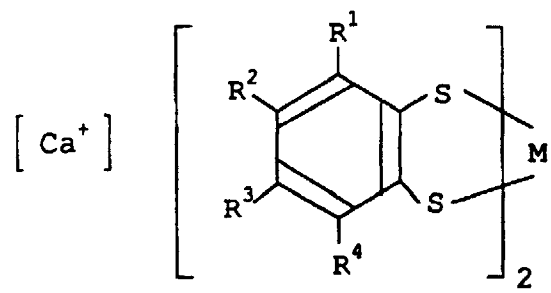

wherein M is Cu, Co, Ni, Pd or Pt; $Ca^+$ denotes a cation which neutralizes the complex; and $R^1$, $R^2$, $R^3$ and $R^4$ each represents a hydrogen atom, a halogen atom, an amino group, a cyano group, a hydroxyl group, or an alkyl group, an aryl group or a heterocyclic group in which a divalent coupling group may exist between the benzene ring to be bonded and such group, at least one of these groups may be an electron donative group, and these groups may be the same or different from each other.

JP-A-61-20,002 proposes an optical filter material containing at least one organo-metallic compound of formula:

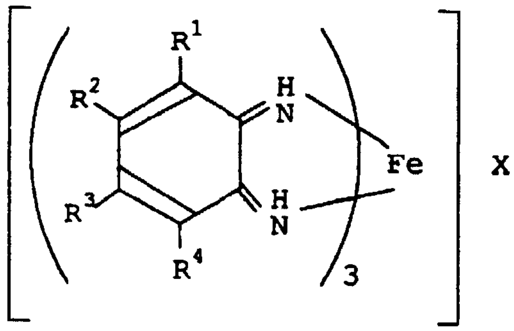

wherein $R^1$, $R^2$, $R^3$ and $R^4$, which may be identical or different, are each a hydrogen atom, a halogen atom, a cyano group, a hydroxyl group, or an alkyl group, an aryl group, a cycloalkyl group or a heterocyclic group in which a divalent coupling group may exist between the benzene ring to be bonded and such group, or $R^1$ and $R^2$, $R^2$ and $R^3$ or $R^3$ and $R^4$ designate non-metallic atomic groups which are bonded to each other to form a 5- or 6-member ring; and X denotes an anion which neutralizes the cation in the above formula.

EP-A-19,097 discloses a methacrylic resin comprising a methacrylic resin, or organic compound containing a cupric ion and a compound having at least one P-O-H bond in its molecule.

All these filters, however, fail to satisfy all of the quality and performance requirements for an optical filter, such as high cut-off efficiency for light in the near infrared region, low hygroscopicity and good processibility. Therefore, it is strongly desired to provide an optical filter which is light in weight, low in hygroscopicity and good in processibility.

The present invention seeks to provide an optical filter made of a synthetic resin composition, which is capable of efficiently cutting-off light in the near infrared region, is light in weight, is low in hygroscopicity and has easy processing such as molding, cutting and polishing.

As the result of the present inventors' extensive research, it has been found that by molding a composition prepared by adding a metallic compound mainly composed of a copper compound to a resin material obtained by copolymerizing a specific monomer having a phosphorous group and another monomer copolymerizable therewith, the obtained optical filter made of synthetic resins is capable of efficiently cutting-off light in the near infrared region, has low hygroscopicity, has proof against devitrification over time, is light in weight and is suited for use as a photometric filter or a luminous efficiency filter for cameras.

The present invention therefore provides an optical filter comprising: a resin material obtainable by copolymerizing a monomer represented by the following formula (I) and a monomer copolymerizable therewith; and a metallic compound mainly composed of a copper compound:

$$PO(OH)_n\ R_{3-n} \qquad (I)$$

wherein R represents

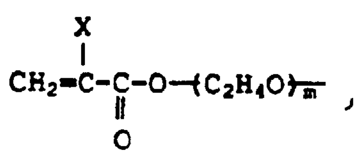

wherein each X independently represents a hydrogen atom or a methyl group, and m is an integer of 0 to 5, and n is 1 or 2.

Fig. 1 shows spectral transmittance curves of the optical filters obtained according to Examples 1 and 2 of the present invention.

In the present invention, a specific phosphorus group-containing monomer of formula (I) is used as one of the monomers for obtaining a resin material constituting a primary component of the optical filter of the present invention.

The monomers of formula (I) have a phosphorous group which can be bonded to a copper compound as described later. A copolymer with a bond to the copper compound by means of the phosphorous group shows typical light absorbing characteristics in the near infrared region.

Further, in the monomer an acryloyloxy or methacryloyloxy group, which is a radical polymerizable functional group, is bonded through an ethylene oxide group, so that the monomer has very high copolymerizability and can be copolymerized with various monomers.

In formula (I) R is an acryloyloxy group (when X is a hydrogen atom) or a methacryloyloxy group (when X is a methyl group), to which an ethylene oxide group is bonded.

In the above molecular structure, the repeating number represented by m, of the ethylene oxide group, is O to 5, preferably 1 to 4. When m exceeds 5, the obtained copolymer may have an excessively low hardness and be incapable of practical use for producing an optical filter.

The number of hydroxyl groups, n, is 1 or 2, which is selected according to the optical filter-molding method employed and the use of the filter obtained.

When n = 2, that is, when the number of the radical polymerizable functional groups bonded to the phosphorus atom is 1, the monomer of formula (I) is apt to bond to a copper compound. On the other hand, when n = 1, that is, when the number of the functional groups is 2, the monomer of formula (I) has crosslinked polymerizability.

Therefore, when producing an optical filter of the present invention by an injection-molding method or an extrusion-molding method, which are the common molding methods for thermoplastic resins, it is preferred to use a monomer of formula (I) wherein n is 2. It is of course possible to use other optical filter molding methods available in the art.

Thus, the value of n can be selected according to the intended performance of the optical filter to be produced, the molding method employed and the use of the produced filter. It is preferred to use both a monomer with n = 1 and a monomer with n = 2 (for example, in a ratio of n = 1 monomer to n = 2 monomer of 10 - 90 to 90 - 10, preferably 70 to 20). It is especially preferred to use both of said monomers in a substantially equal ratio (i.e. 47 - 53 to 53 - 47), in which the solubility of the copper compound in the monomer mixture is enhanced.

The monomer mixture used for preparing a resin material for use in the present invention contains a copolymerizable monomer in addition to the specific monomer described above.

The copolymer obtained from copolymerization of the specific phosphorous group-containing monomer and a copolymerizable monomer has low hygroscopicity and can satisfy the hardness condition required for an optical filter. By using such a copolymer a molded product with excellent form stability can be obtained.

The copolymerizable monomer used in the present invention is not restricted as far as the following requirements are satisfied: (1) it can be uniformly dissolved and mixed with the specific phosphorous group-containing monomer; (2) it has good radical copolymerizability with the specific phosphorous group-containing monomer; and (3) it is capable of producing an optically transparent copolymer.

Examples of copolymerizable monomers usable in the present invention include monofunctional acrylates or monofunctional methacrylates, for example, alkyl acrylates or alkyl methacrylates such as methyl acrylate, methyl methacrylate, ethyl acrylate, ethyl methacrylate, n-propyl acrylate, n-propyl methacrylate, n-butyl acrylate, n-butyl methacrylate, isobutyl acrylate, isobutyl methacrylate, n-hexyl acrylate, n-hexyl methacrylate, n-octyl acrylate, n-octyl methacrylate and 2-ethylhexyl methacrylate, and modified alkyl acrylates or modified alkyl methacrylates such as glycidyl acrylate, glycidyl methacrylate, 2-hydroxyethyl acrylate, 2-hydroxyethyl methacrylate, 2-hydroxypropyl acrylate, 2-hydroxypropyl methacrylate, 2-hydroxybutyl acrylate and 2-hydroxybutyl methacrylate; polyfunctional acrylates or polyfunctional methacrylates such as ethylene glycol diacrylate, ethylene glycol dimethacrylate, diethylene glycol diacrylate, diethylene glycol dimethacrylate, polyethylene glycol diacrylate, polyethylene glycol dimethacrylate, polypropylene glycol diacrylate, polypropylene glycol dimethacrylate, 1,3-butylene glycol diacrylate, 1,3-butylene glycol dimethacrylate, 1,4-butanediol diacrylate, 1,4-butanediol dimethacrylate, 1,6-hexanediol diacrylate, 1,6-hexanediol dimethacrylate, neopentyl glycol diacrylate, neopentyl glycol dimethacrylate, 2-hydroxy-1,3-dimethacryloxypropane, 2,2-bis[4-(methacryloxyethoxy)phenyl]propane, 2-hydroxy-1-acryloxy-3-methacryloxypropane, trimethylolpropane trimethacrylate, trimethylolpropane triacrylate, pentaerythritol triacrylate, pentaerythritol trimethacrylate, pentaerythritol tetraacrylate, and pentaerythritol tetramethacrylate; carboxylic acids such as acrylic acid, methacrylic acid, 2-methacryloyloxyethylsuccinic acid, and 2-methacryloyloxyethylphthalic acid; and aromatic vinyl compounds such as styrene, $\alpha$-methylstyrene, chlorostyrene, dibromostyrene, methoxystyrene, divinylbenzene, vinylbenzoic acid, hydroxymethylstyrene, and trivinylbenzene.

These compounds may be used either singly or in admixture thereof.

Among the above-mentioned compounds, methyl methacrylate, ethyl acrylate, n-butyl methacrylate, 2-ethylhexyl methacrylate, ethylene glycol dimethacrylate, diethylene glycol dimethacrylate, 1,4-butanediol diacrylate, 1,6-hexanediol dimethacrylate, methacrylic acid, styrene, $\alpha$-methylstyrene and divinylbenzene are preferred.

In the monomer mixture for preparing a resin material, the ratio (by weight) of the specific phosphorous group-containing monomer to the copolymerizable monomer is preferably 3 : 97 to 80 : 20, more preferably 10 : 90 to 70 : 30.

When the content of the specific phosphorous group-containing monomer is less than 3% by weight, it is hardly

possible to produce the light-absorbing characteristics which are required in an optical filter. On the other hand, when the content exceeds 80% by weight, the obtained copolymer has a high hygroscopicity and tends to become too soft, so as not to satisfy the required hardness condition.

The copolymer as a component of the resin material of the optical filter of the present invention can be obtained by radical-polymerizing a mixture of a specific phosphorous group-containing monomer and a copolymerizable monomer.

The method for radical polymerization is not specified in the present invention. It is possible to employ a known method using an ordinary radical polymerization initiator, such as cast polymerization, suspension polymerization, emulsion polymerization and solution polymerization.

The optical filter of the present invention comprises the above-described resin material and a metallic compound mainly composed of a copper compound.

This metallic compound in cooperation with the phosphorous group contained in the resin material has an efficient absorption of light in the near infrared region.

The expression of "mainly composed of a copper compound" used here means that the content of copper in all the metals contained in the metallic compound is not less than 80% by weight. More specifically, the "metallic compound" used in the present invention is a compound in which a compound containing divalent copper and a compound composed of other metal(s) are contained in a condition satisfying the above content. When the content of copper is less than 80% by weight, the obtained optical filter is unable to efficiently absorb light in the near infrared region. Thus, the content of copper metal in the metallic compound is not less than 80% by weight, preferably not less than 85% by weight.

Various compounds can be used as the copper compound constituting the metallic compound. Examples of such compounds include anhydrides and hydrates of copper acetate, copper chloride, copper formate, copper stearate, copper benzoate, copper ethylacetoacetate, copper pyrophosphate, copper naphthenate, copper citrate, and copper acetylacetonate.

Among these compounds, anhydrides and hydrates of copper acetate, copper chloride, copper formate, copper benzoate, copper ethylacetoacetate and copper acetylacetonate are preferred.

As the compounds composed of other metal(s), which constitutes another component of the metallic compound, compounds having such metals as sodium, potassium, calcium, iron, manganese, cobalt, magnesium or nickel as components can be used according to the use of the optical filter.

In the optical filter of the present invention, the content of the metallic compound contained therein is preferably 0.1 to 50 parts by weight, more preferably 0.1 to 40 parts by weight, still more preferably 0.1 to 30 parts by weight, based on 100 parts by weight of the copolymer constituting the resin material of the filter. When the content is less than 0.1 parts by weight, the filter is unable to efficiently absorb light in the near infrared region. When the content exceeds 50 parts by weight, the metallic compound may fail to be uniformly dispersed in the copolymer.

The copper content in the optical filter of the present invention is preferably 0.1 to 20 parts by weight, more preferably 1 to 20 parts by weight, based on 100 parts by weight of the copolymer.

The method for incorporating the metallic compound in the copolymer is not specified in the present invention, but the following two methods may be cited as preferable methods.

(1) Method in which the metallic compound is added to and dissolved in a monomer mixture before the monomer mixture is subjected to radical polymerization.

By this method, the metallic compound can be contained in the monomer mixture to form a monomeric mixture composed of the metallic compound, a specific phosphorous group-containing monomer and a copolymerizable monomer. By subjecting the resultant monomeric mixture to radical polymerization, there can be obtained a copolymer in which the metallic compound is incorporated (optical filter material). The thus obtained optical filter material can be used as an optical filter as it is, or after molding and processing into a desired form.

(2) Method in which the metallic compound is added to and mixed in the copolymer obtained by subjecting the monomer mixture to radical polymerization.

In this case, addition of the metallic compound in the copolymer may be accomplished by, for example, the following methods: (i) the copolymer is melted and the metallic compound is added therein; (ii) the copolymer is dissolved in an organic solvent, and the metallic compound is added in the resultant solution.

In the manners (i) and (ii) described above, there can be obtained an optical filter material containing a metallic compound mainly composed of a copper compound.

This optical filter material is manufactured into a desired form such as a plate-like, columnar or lens-like shape according to the intended use, and polished to form an optical filter of the present invention.

The optical filter of the present invention has a specific gravity of not more than 1.45, preferably 1.10 to 1.40, a refractive index of 1.45 to 1.55, preferably 1.47 to 1.54, a water absorption of not more than 4% by weight, preferably not more than 3% by weight, and a light transmittance in the near infrared region (700 - 1,000 nm) of not more than 20%, preferably not more than 15%.

The optical filter produced in the manner described above is capable of efficiently absorbing light in the near infrared region and is suited for use, in particular, as a photometric filter for adjusting the characteristics of photodiodes or as a luminous efficiency filter, especially for a red colour. It can also be advantageously used as a photometric filter or a luminous efficiency filter for cameras.

## EXAMPLES

The present invention is further described in the following Examples. In the Examples, all "parts" are "parts by weight" unless otherwise noted.

### Example 1

10 parts of a specific phosphorous group-containing monomer of the following formula (II), 10 parts of another specific phosphorous group-containing monomer of the following formula (III), 58.5 parts of methyl methacrylate, 20 parts of diethylene glycol dimethacrylate and 1.5 parts of α-methylstyrene were mixed well to prepare a monomer mixture. Into the resultant monomer mixture, 14 parts of anhydrous copper benzoate (the copper content being 2.9 parts based on 100 parts of the monomer mixture) was added and dissolved well by stirring at a temperature of 60°C, thereby obtaining a monomeric mixture comprising the monomer mixture having anhydrous copper benzoate dissolved therein.

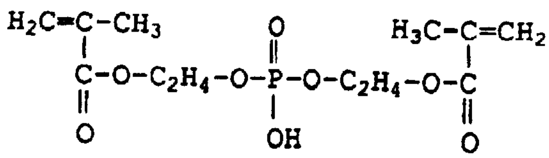

(II)

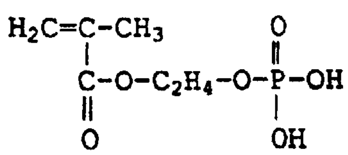

(III)

To the thus prepared monomeric mixture, 2.0 parts of t-butyl peroxypivalate was added. The mixture was then heated at a temperature of 45°C for 16 hours, then at a temperature of 60°C for 8 hours and further at a temperature of 90°C for 3 hours to perform cast polymerization, thereby obtaining an optical filter material comprising a crosslinked polymer in which a copper compound is incorporated.

This optical filter material was cut into a 1 mm thick sheet and subjected to surface polishing to produce an optical filter of the present invention.

The optical filter thus obtained had a low specific gravity of 1.24 and its refractive index was 1.505.

The water absorption of this optical filter was determined by the following method.

The optical filter was dried at a temperature of 80°C for 5 hours and then immersed in water at 25°C for 24 hours. The water absorption (W) was determined from the following equation:

$$W = (W_2 - W_1)/W_1 \times 100\ (\%)$$

wherein $W_1$ represents the weight (g) of the filter before immersion and $W_2$ represents the weight (g) of the filter after immersion.

The water absorption of this optical filter was determined to be 0.9% by weight, and no devitrification of the filter was observed after immersion.

The spectral transmittance of this optical filter was measured using a spectro-photometer. The result is shown in Fig. 1.

As seen from the solid-line curve 1 in Fig. 1, the optical filter obtained according to this Example could efficiently cut off light in the near infrared region (700 - 1,000 nm).

When the spectral transmittance of the optical filter after immersion in water under the above conditions was similarly measured, there was obtained a spectral transmittance curve similar to that before immersion.

Example 2

15 parts of a specific phosphorous group-containing monomer of the formula (II), 15 parts of another specific phosphorous group-containing monomer of the formula (III), 45 parts of methyl methacrylate, 20 parts of 1,4-butanediol diacrylate and 5 parts of methacrylic acid were mixed well to prepare a monomer mixture. Into the resultant monomer mixture, 15 parts of anhydrous copper acetate (copper content being 5.3 parts based on 100 parts of the monomer mixture) and 1 part of iron oxalate (II) dihydrate ($FeC_2O_4 \cdot 2H_2O$) (the iron content being 5.4% by weight based on the total metal weight) were added and dissolved well by stirring at a temperature of 60°C, thereby obtaining a monomeric mixture comprising the monomer mixture having anhydrous copper acetate and iron oxalate dissolved therein.

The thus prepared monomeric mixture was subjected to cast polymerization, cutting and polishing in the same way as Example 1 to produce an optical filter of the present invention.

This optical filter had a low specific gravity of 1.29 and its refractive index was 1.511. The water absorption of this optical filter was determined in the same manner as Example 1, and was 3.2% by weight. No devitrification of the filter was observed after immersion.

The spectral transmittance of this optical filter was measured using a spectrophotometer. The result is shown in Fig. 1.

As seen from the dotted-line curve 2 in Fig. 1, the optical filter obtained according to this Example could efficiently absorb light in the near infrared region (700 - 1,000 nm).

When the spectral transmittance of the optical filter after immersion in water under the above conditions was similarly measured, there was obtained a spectral transmittance curve similar to that before immersion.

## Claims

**1.** An optical filter comprising:

a resin material obtainable by copolymerizing a monomer represented by the following formula (I) and a monomer copolymerizable therewith; and
a metallic compound mainly composed of a copper compound:

$$PO(OH)_n R_{3-n} \quad (I)$$

wherein R represents

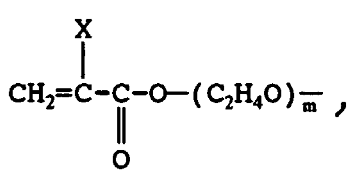

wherein each X independently represents a hydrogen atom or a methyl group, and m is an integer of 0 to 5, and n is 1 or 2.

**2.** An optical filter according to claim 1 comprising 0.1 to 40 parts by weight of the metallic compound based on 100 parts by weight of the resin material.

**3.** An optical filter according to claim 1 or 2 wherein the copper content in the optical filter is 0.1 to 20 parts by weight based on 100 parts by weight of the resin material.

**4.** An optical filter according to any one of the preceding claims wherein the ratio of the monomer units represented by the formula (I) to the copolymerizable monomer units in the resin material is 3:97 to 80:20.

**5.** An optical filter according to any one of the preceding claims wherein the copper metal content in the metallic compound is not less than 85% by weight based on the weight of all metals in the metallic compound.

**6.** An optical filter according to any one of the preceding claims wherein the monomer represented by the formula (I) is a mixture of the n=1 monomer and the n=2 monomer.

**7.** An optical filter according to claim 6 wherein the ratio of the n=1 monomer to the n=2 monomer in the mixture thereof is 10:90 to 90:10.

**8.** An optical filter according to any one of the preceding claims wherein said copolymerizable monomer is selected from monofunctional acrylates, monofunctional methacrylates, polyfunctional acrylates, polyfunctional methacrylates, carboxylic acids and aromatic vinyl compounds.

**Patentansprüche**

**1.** Optisches Filter, umfassend:

ein Harzmaterial, erhalten durch Copolymerisation eines Monomeren, dargestellt durch die folgende Formel (I) und eines Monomeren, das damit copolymerisierbar ist; und
eine Metallverbindung, hauptsächlich zusammengesetzt aus einer Kupferverbindung:

$$PO(OH)_nR_{3-n} \qquad (I)$$

worin R

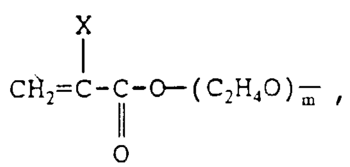

worin jedes X unabhängig ein Wasserstoffatom oder eine Methylgruppe bedeutet und m eine ganze Zahl von 0 bis 5 bedeutet und n 1 oder 2 bedeutet.

**2.** Optisches Filter nach Anspruch 1, dadurch **gekennzeichnet,** daß es 0,1 bis 40 Gew.-Teile Metallverbindung, bezogen auf 100 Gew.-Teile Harz, enthält.

**3.** Optisches Filter nach Anspruch 1 oder 2, dadurch **gekennzeichnet,** daß der Kupfergehalt in dem optischen Filter 0,1 bis 20 Gew.-Teile, bezogen auf 100 Gew.-Teile Harzmaterial, beträgt.

**4.** Optisches Filter nach einem der vorhergehenden Ansprüche, dadurch **gekennzeichnet,** daß das Verhältnis der Monomereneinheit, dargestellt durch die Formel (I), zu den copolymerisierbaren Monomereneinheiten in dem Harzmaterial 3:97 bis 80:20 beträgt.

**5.** Optisches Filter nach einem der vorhergehenden Ansprüche, dadurch **gekennzeichnet,** daß der Kupfermetallgehalt in der Metallverbindung nicht weniger als 85 Gew.-%, bezogen auf das Gewicht aller Metalle in der Metallverbindung, beträgt.

**6.** Optisches Filter nach einem der vorhergehenden Ansprüche, dadurch **gekennzeichnet**, daß das Monomere, das durch die Formel (I) dargestellt wird, ein Gemisch aus dem n=1-Monomeren und dem n=2-Monomeren ist.

**7.** Optisches Filter nach Anspruch 6, dadurch **gekennzeichnet,** daß das Verhältnis von n=1-Mo-nomerem zu n=2-Monomerem in dem Gemisch 10:90 bis 90:10 beträgt.

**8.** Optisches Filter nach einem der vorhergehenden Ansprüche, dadurch **gekennzeichnet**, daß das copolymerisierbare Monomere ausgewählt wird aus monofunktionellen Acrylaten, monofunktionellen Methacrylaten, polyfunktionellen Acrylaten, polyfunktionellen Methacrylaten, Carbonsäuren und aromatischen Vinylverbindungen.

**Revendications**

**1.** Filtre optique comprenant : une matière résineuse pouvant être obtenue par copolymérisation d'un monomère représenté par la formule (I) suivante et d'un monomère qui lui est copolymérisable ; et
un composé métallique composé principalement d'un composé du cuivre :

$$PO(OH)_nR_{3-n} \qquad (I)$$

où R représente

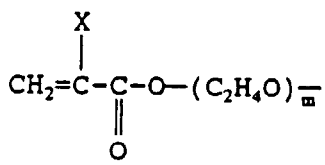

où chaque X indépendamment représente un atome d'hydrogène ou un groupe méthyle, et m est un entier de 0 à 5 et n est 1 ou 2.

**2.** Filtre optique selon la revendication 1, comprenant 0,1 à 40 parties en poids du composé métallique relativement à 100 parties en poids de la matière résineuse.

**3.** Filtre optique selon la revendication 1 ou 2, où la teneur en cuivre du filtre optique est de 0,1 à 20 parties en poids, relativement à 100 parties en poids de la matière résineuse.

**4.** Filtre optique selon l'une quelconque des revendications précédentes, où le rapport des motifs monomères représentés par la formule (I) aux motifs monomères copolymérisables dans la matière résineuse est de 3/97 à 80/20.

**5.** Filtre optique selon l'une quelconque des revendications précédentes, où la teneur du métal cuivre dans le composé métallique n'est pas inférieure à 85 % en poids, relativement au poids de tous les métaux dans le composé métallique.

**6.** Filtre optique selon l'une quelconque des revendications précédentes, où le monomère représenté par la formule (I) est un mélange du monomère n = 1 et du monomère n = 2.

**7.** Filtre optique selon la revendication 6, où le rapport du monomère n = 1 au monomère n = 2 dans leur mélange est de 10/90 à 90/10.

**8.** Filtre optique selon l'une quelconque des revendications précédentes où ledit monomère copolymérisable est

choisi parmi les acrylates monofonctionnels, les méthacrylates monofonctionnels, les acrylates polyfonctionnels, les méthacrylates polyfonctionnels, les acides carboxyliques et les composés vinyliques aromatiques.

# FIG.1

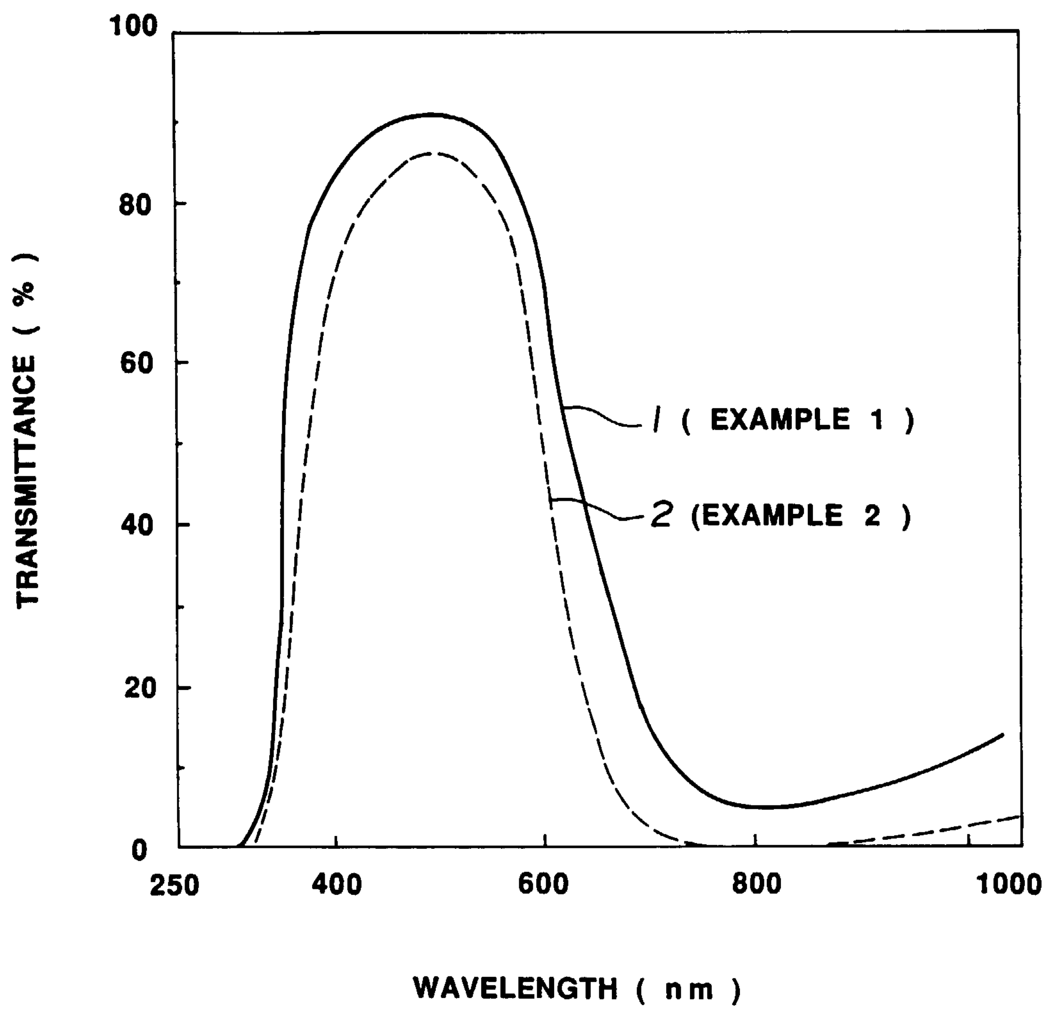
100
80
60
40
20
0
250
400
600
800
1000
TRANSMITTANCE ( % )
WAVELENGTH ( nm )
1 ( EXAMPLE 1 )
2 (EXAMPLE 2 )